# EUROPEAN PATENT SPECIFICATION

(11) **EP 4 436 673 B1**
(45) Date of publication and mention of the grant of the patent: **22.04.2026**
(21) Application number: 22898000.9
(22) Date of filing: 07.09.2022
(51) Int. Cl.: A62C 3/02, A62C 5/00, B64D 1/16, A01C 14/00, A62C 5/033, A62C 8/00, A62D 1/00, B64U 101/47

(54) **A SOLID FIREFIGHTING PREFORM, A METHOD IN AERIAL FIREFIGHTING, AND AN AERIAL FIREFIGHTING VEHICLE**
FESTE BRANDBEKÄMPFUNGSVORFORM, VERFAHREN ZUR LUFTBRANDBEKÄMPFUNG UND LUFTBRANDBEKÄMPFUNGSFAHRZEUG
PRÉFORME SOLIDE DE LUTTE CONTRE LES INCENDIES, PROCÉDÉ DE LUTTE CONTRE LES INCENDIES AÉRIEN ET VÉHICULE DE LUTTE CONTRE LES INCENDIES AÉRIEN

(30) Priority: 26.11.2021 FI 20216211
(43) Date of publication of application: 02.10.2024
(73) Proprietor: Aviogel S.r.l., L'Aquila (AQ) (IT)
(72) Inventor: LICHTENTHAL, Vlad Stefan, L'Aquila (IT); SGOBBA, Nicolò, L'Aquila (IT); CARBONE, William, L'Aquila (IT)
(74) Representative: Primrose Oy
(86) International application number: PCT/FI2022/050595
(87) International publication number: WO 2023/094723

(56) References cited:
- WO-A1-2016/090330
- CN-A- 112 937 867
- ES-A1- 2 112 181
- JP-A- H09 154 323
- KR-A- 20170 019 620
- US-A1- 2016 107 011
- US-A1- 2017 072 236
- US-A1- 2017 216 638
- US-A1- 2020 102 498

## Description

### FIELD OF THE INVENTION

The present invention relates to a solid firefighting preform and more particularly to a solid firefighting preform according to preamble of claim 1. The present invention also relates to a method in aerial firefighting and more particularly to a method according to the preamble of claim 9.

### BACKGROUND OF THE INVENTION

Aerial firefighting with firefighting aeroplanes is commonly used for extinguishing or containing forest fires or wildfires and or the like rural fires at locations that are difficult to reach with ground-based firefighting forces. In prior art, firefighting aeroplanes carry water or other fire-extinguishing liquid or foam and release and drop the liquid or foam over the location of the fire for extinguishing or containing the fire. The firefighting aeroplanes are designed such that they can intake water from natural water resources such as rivers, lakes, or the sea and fly to the location of the fire to drop the water for extinguishing the fire.

One of the problems associated with the prior art of aerial firefighting is that it is inefficient in providing considerable amounts of fire-extinguishing liquid into the fire. When the fire-extinguishing liquid is released from the aeroplane it is subjected to wind during the drop towards the fire and towards the ground. The wind can carry the fire-extinguishing liquid away from the location of the fire such that the fire-extinguishing liquid does not reach the fire. Further, during the drop from the aeroplane until the fire-extinguishing liquid or foam reaches the fire, the liquid or foam tends to break into tiny droplets or pieces. These tiny droplets or pieces further tend to evaporate before they reach the ground and the fire. The fire increases the evaporation due to the increasing temperature towards the fire. Accordingly, in the prior art, only a portion of the fire-extinguishing liquid or foam reaches the fire making aerial firefighting inefficient.

Some prior art solutions comprise dropping of pre-packaged preforms containing fire-extinguishing liquids and other chemicals, but while this improves the precision of the dropping, they generate other problems in cost, logistics, and environment as the chemical additives used to extinguish the fire pollute what actually remains of the environment.

Known solutions in the prior art are described in documents WO 2016/090330 A1, US 2020/102498 A1, CN 112 937 867 A and US 2017/072236 A1.

### BRIEF DESCRIPTION OF THE INVENTION

An object of the present invention is to provide a solid liquid-absorbent firefighting preform, a method in aerial firefighting, and an aerial firefighting vehicle such that the prior art disadvantages may be solved or at least alleviated.

The objectives of the present invention are achieved with a solid firefighting preform according to claim 1. The objectives of the present invention are also achieved with a method according to claim 9.

The present invention is based on the idea of providing a solid firefighting preform comprising a liquid-absorbent layer, the liquid-absorbing layer comprising swellable liquid absorbing material arranged to absorb fire-extinguishing liquid, and a nucleus layer provided inside the liquid absorbing layer, the nucleus layer comprising one or more functional elements configured to interact with the soil.

Accordingly, the solid firefighting preform has a dual function. The liquid-absorbing layer enables extinguishing the fire when it is impregnated with the fire-extinguishing liquid, and the functional elements of the nucleus layer enable providing functional interaction with the soil in the area of the fire.

According to the invention, the solid firefighting preform comprises a middle layer provided between the liquid-absorbent layer and the nucleus layer. The middle layer comprises fire-retardant material.

The middle layer is provided to protect the nucleus layer and the functional elements thereof from the fire.

In some embodiments, the solid liquid-absorbent preforms are made of material having a liquid absorption weight ratio of at least 10 g of liquid per 1 g of the material of the solid liquid-absorbent preforms. Accordingly, the solid liquid-absorbent preforms are able to absorb liquid 10 times their own weight.

In some other embodiments, the solid liquid-absorbent preforms are made of material having a liquid absorption weight ratio of at least 50 g of liquid per 1 g of the material of the solid liquid-absorbent preforms. Accordingly, the solid liquid-absorbent preforms are able to absorb liquid 50 times their own weight.

In some further embodiments, the solid liquid-absorbent preforms are made of material having a liquid absorption weight ratio of at least 100 g of liquid per 1 g of the material of the solid liquid-absorbent preforms. Accordingly, the solid liquid-absorbent preforms are able to absorb liquid 100 times their own weight.

In some yet other embodiments, the solid liquid-absorbent preforms are made of material having a liquid absorption weight ratio of at least 200 g of liquid per 1 g of the material of the solid liquid-absorbent preforms. Accordingly, the solid liquid-absorbent preforms are able to absorb liquid 200 times their own weight.

The higher the liquid absorption weight ratio of the solid liquid-absorbent preforms is, the more liquid the preforms may absorb, making the method more efficient as more liquid may be provided to each preform.

In some embodiments, the solid liquid-absorbent preforms are made of material having a liquid absorption swelling ratio of at least 10 times the volume of the liquid-absorbent solid preforms. Accordingly, the solid liquid-absorbent preforms are able to swell or increase volume at least 10 times during absorption of the fire-extinguishing liquid.

In some other embodiments, the solid liquid-absorbent preforms are made of material having a liquid absorption swelling ratio of at least 25 times the volume of the liquid-absorbent solid preforms. Accordingly, the solid liquid-absorbent preforms are able to swell or increase volume at least 25 times during absorption of the fire-extinguishing liquid.

In some further embodiments, the solid liquid-absorbent preforms are made of material having a liquid absorption swelling ratio of at least 50 times the volume of the liquid-absorbent solid preforms. Accordingly, the solid liquid-absorbent preforms are able to swell or increase volume at least 50 times during absorption of the fire-extinguishing liquid.

The higher the liquid absorption swelling ratio of the solid liquid-absorbent preforms, the larger the fire-extinguishing bombs become. Larger bombs provide a direct impact on a larger area in the fire, and thus larger area is also covered with each bomb. Thus, the fire-extinguishing effect is therefore enhanced.

In some embodiments, the solid liquid-absorbent preforms are made of or comprise superabsorbent material, or superabsorbent polymer material, or cellulose-based superabsorbent material, or hydrogel material.

Superabsorbent materials are materials that can absorb at least 10 times weight in aqueous fluids, preferably at least 50 times, more preferably at least 100 times, or at least 200 times.

Hydrogels are materials that can absorb at least 10 times weight in aqueous fluids, preferably at least 50 times, more preferably at least 100 times, or at least 200 times.

Cellulose-based superabsorbent material or hydrogel is advantageous as it is biodegradable and does not deteriorate nature or remain in nature.

The liquid absorption weight ratio of the cellulose-based superabsorbent material or hydrogel is at least 10 g of liquid per 1 g, or preferably at least 40 g of liquid per 1 g.

In some embodiments, the one or more functional elements of the nucleus layer comprise one or more plant seeds.

Thus, the solid firefighting preforms enable also planting seeds at the same time as extinguishing fire.

In some other embodiments, the one or more functional elements of the nucleus layer comprise fertilizer material.

The fertilizer material enables modifying properties of the soil in the area of the fire. For example, fertilizers for fertilizing soil for plant growing, or neutralizing the acidity of the soil.

In some further embodiments the one or more functional elements of the nucleus layer comprise fertilizer material and one or more plant seeds.

Accordingly, the solid firefighting preforms enable both plating seeds and providing fertilizers for the soil at the same time with extinguishing fire.

In some embodiments, the nucleus layer comprises biodegradable material. The one or more functional elements or solid particles are provided inside biodegradable material.

In some other embodiments, the nucleus layer comprises bio-based polymer material. The one or more functional elements or solid particles are provided inside bio-based polymer material.

In some further embodiments, the nucleus layer comprises biodegradable polymer material. The one or more functional elements or solid particles are provided inside biodegradable polymer material.

The biodegradable material of the nucleus layer enables postponing the germination process and thus provides good circumstances for growth after the fire.

In some embodiments, the middle layer comprises biodegradable fire-retardant material, biodegradable fire-retardant polymer material.

The biodegradable fire-retardant material protects the nucleus layer during a fire but enables releasing of the functional elements of the nucleus layer into the soil later during the biodegrading process.

In some embodiments, the middle layer comprises a first middle layer and a second middle layer. The first middle layer is arranged between the liquid-absorbent layer and the second middle layer. The second middle layer is arranged between the first middle layer and the nucleus layer.

In some embodiments, the first middle layer comprises liquid absorbing material arranged to absorb fire-extinguishing liquid, and the second middle layer comprises fire-retardant material. The first middle layer is arranged to extinguish fire and the second middle layer to protect the nucleus layer.

In some other embodiments, the first middle layer comprises fire-retardant material, and the second middle layer comprises liquid absorbing material arranged to absorb plant growing liquid. The first middle layer is arranged to protect the nucleus layer, and the second middle layer to provide liquid for the functional elements.

In some further embodiments, the first middle layer comprises fire-retardant material, and the second middle layer comprises liquid absorbing material impregnated with plant-growing liquid.

The present invention is further based on the idea of providing a method of aerial firefighting with an aerial vehicle. The method comprises providing fire-extinguishing liquid in the aerial vehicle, and maintaining solid liquid-absorbent preforms in the aerial vehicle. The solid liquid-absorbent preforms comprise a liquid-absorbent layer, the liquid-absorbing layer comprising swellable liquid absorbing material arranged to absorb fire-extinguishing liquid, and a nucleus layer provided inside the liquid absorbing layer, the nucleus layer comprising one or more functional elements configured to interact with the soil. The method further comprises subjecting at least part of the solid liquid-absorbent preforms to the fire-extinguishing liquid in the aerial vehicle such that the liquid-absorbent layers of the solid liquid-absorbent preforms absorb the fire-extinguishing liquid to form fire-extinguishing bombs from the solid liquid-absorbent preforms, the liquid-absorbent layers of the fire-extinguishing bombs being impregnated with the fire-extinguishing liquid. The method also comprises releasing the fire-extinguishing bombs having the liquid-absorbent layer surrounding the nucleus layer and impregnated with the fire-extinguishing liquid from the aerial vehicle for extinguishing or containing fire with the fire-extinguishing bombs.

In the present invention, the fire-extinguishing liquid is absorbed into the liquid-absorbent layer of the solid liquid-absorbent preforms to form the fire-extinguishing bombs which, are then released and dropped from the aerial firefighting vehicle. Thus, as the extinguishing are objects, they do not break in the wind into smaller droplets, and they also travel in a more linear manner and with greater velocity towards the fire. Thus, fire-extinguishing bombs may be efficiently targeted in the fire. Furthermore, evaporation from the fire-extinguishing bombs is low as a considerable amount of liquid is absorbed into each bomb. Accordingly, a considerable amount of the released fire-extinguishing liquid reaches the fire. Additionally, the impact of the fire-extinguishing bomb against the fire or burning material has an additional extinguishing effect on the fire.

In some embodiments, the solid liquid-absorbent preforms are provided as powder material, in which the separate solid liquid-absorbent preforms have a particle diameter of less than 1 mm.

Small particle size enhances the absorption process.

In some other embodiments, the solid liquid-absorbent preforms are provided as granule material, in which the separate solid liquid-absorbent preforms have particle diameters between 1 to 10 mm.

The granules have good absorption properties and provide fire-extinguishing bombs having a diameter of at least 10 mm.

In some further embodiments, the solid liquid-absorbent preforms are provided as separate preform blanks having a diameter between 10 to 100 mm.

The preform blanks are able to provide fire-extinguishing bombs having a diameter of at least 100 mm, which are efficient in extinguishing or containing fire and provide good dropping properties.

In some embodiments, the fire-extinguishing bombs have a spherical or ellipsoid shape.

In some other embodiments, the fire-extinguishing bombs have a rectangular or polygonal shape.

In some further embodiments, the fire-extinguishing bombs have a flat or plate-like shape. The flat or plate-like shape enables covering larger surface areas on the ground.

In some other embodiments, the fire-extinguishing bombs have different shapes and different sizes or diameters. The fire-extinguishing bombs having different sizes and shapes enable variable fire-extinguishing effects during firefighting. The flat or plate-like shape substantially means a two-dimensional shape.

The different shapes may comprise at least two of the following: spherical, ellipsoid, rectangular, polygonal shape, flat, and plate-like shapes.

In some embodiments, the fire-extinguishing liquid is water or an aqueous solution.

Water is advantageous as it may be acquired directly from natural water sources such as sea, lakes, or the like, and it has good absorption properties into superabsorbent materials and hydrogels.

In some embodiments, the solid liquid-absorbent preforms are subjected to the fire-extinguishing liquid for an absorption time for forming the fire-extinguishing bombs before releasing the fire-extinguishing bombs from the aerial vehicle, the absorption time being between 0 to 60 s.

In some other embodiments, the solid liquid-absorbent preforms are subjected to the fire-extinguishing liquid for an absorption time for forming the fire-extinguishing bombs before releasing the fire-extinguishing bombs from the aerial vehicle, the absorption time being between 1 to 5 min.

In some further embodiments, the solid liquid-absorbent preforms are subjected to the fire-extinguishing liquid for an absorption time for forming the fire-extinguishing bombs before releasing the fire-extinguishing bombs from the aerial vehicle, the absorption time being between 5 to 10 min.

In some yet other embodiments, the solid liquid-absorbent preforms are subjected to the fire-extinguishing liquid for an absorption time for forming the fire-extinguishing bombs before releasing the fire-extinguishing bombs from the aerial vehicle, the absorption time being between 10 to 30 min.

Liquid absorption generally occurs linearly as a response to the absorption time until an equilibrium liquid uptake is reached. The equilibrium liquid uptake usually corresponds to approximately 90% of the full absorption capacity of the material or the solid liquid-absorbent preforms.

Thus, increasing the absorption time increases the fire-extinguishing liquid absorption into the solid liquid-absorbent preforms up to the equilibrium liquid uptake.

In some embodiments, the solid liquid-absorbent preforms are subjected to the fire-extinguishing liquid, and the fire-extinguishing bombs are formed upon releasing the fire-extinguishing bombs from the aerial vehicle.

Thus, the fire-extinguishing bombs do not need to be stored inside the aerial firefighting vehicle.

This also provides a fast process when a total absorption capacity of the preforms is not needed.

In some embodiments, the method comprises adding the solid liquid-absorbent preforms into the fire-extinguishing liquid in the aerial vehicle for forming the fire-extinguishing bombs from the solid liquid-absorbent preforms.

This enables subjecting all the added preforms quickly and efficiently to the fire-extinguishing liquid.

In some other embodiments, the method comprises adding the fire-extinguishing liquid into the solid liquid-absorbent preforms in the aerial vehicle for forming the fire-extinguishing bombs from the solid liquid-absorbent preforms.

This enables controlling the absorption process with a supply of the liquid in greater detail.

In some further embodiments, the method comprises mixing the solid liquid-absorbent preforms and the fire-extinguishing liquid in a mixing chamber in the aerial vehicle for forming the fire-extinguishing bombs from the solid liquid-absorbent preforms.

This enables forming fire-extinguishing bombs in two or more stages or a pre-determined amount at a time.

In some embodiments, the method comprises loading the fire-extinguishing liquid into the aerial vehicle, or loading the fire-extinguishing liquid into the aerial vehicle and into a tank inside the aerial vehicle.

The loading may be carried directly from a natural water source.

In some other embodiments, the method comprises loading the fire-extinguishing liquid into an external tank outside the aerial vehicle.

In this embodiment, there is no need to take the water extinguishing liquid inside the aerial firefighting vehicle.

In some embodiments, releasing the fire-extinguishing bombs from the aerial vehicle comprises dropping the fire-extinguishing bombs from the aerial vehicle.

In some other embodiments, releasing the fire-extinguishing bombs from the aerial vehicle comprises opening a hatch provided to the aerial vehicle and dropping the fire-extinguishing bombs from the aerial vehicle via the hatch.

Accordingly, the fire-extinguishing bombs are released from the vehicle and let to drop freely towards the fire.

The present invention is also based on the idea of providing an aerial firefighting vehicle for extinguishing or containing fires with extinguishing material. The vehicle comprises a tank arranged to hold fire-extinguishing liquid, and a release hatch for releasing the extinguishing material from the vehicle for extinguishing a fire. The vehicle further comprises a container arranged to hold solid liquid-absorbent preforms and a mixing arrangement arranged to subject the solid liquid-absorbent preforms to the fire-extinguishing liquid.

According to the present invention, the solid liquid-absorbent preforms comprise a liquid-absorbent layer, the liquid-absorbing layer comprising swellable liquid absorbing material arranged to absorb fire-extinguishing liquid, and a nucleus layer provided inside the liquid absorbing layer, the nucleus layer comprising one or more functional elements configured to interact with the soil. The mixing arrangement comprises a mixing device arranged to mix the solid liquid-absorbent preforms and the fire-extinguishing liquid such that the liquid-absorbent layer is impregnated with the fire-extinguishing liquid for forming fire-extinguishing bombs from the solid liquid-absorbent preforms in the aerial firefighting vehicle. Accordingly, the aerial firefighting vehicle is arranged to generate or form fire-extinguishing bombs by subjecting the solid liquid-absorbent preforms to the fire-extinguishing liquid in the aerial vehicle.

In some embodiments, the mixing arrangement comprises a preform supply element arranged to provide a supply of the solid liquid-absorbent preforms from the container to the tank. The hatch is provided in fluid connection with the tank.

Accordingly, the fire-extinguishing bombs are formed in the tank and released from the tank.

In some other embodiments, the mixing arrangement comprises a liquid supply element arranged to provide a supply of the fire-extinguishing liquid from the tank to the container. The hatch is provided in fluid connection with the container.

Accordingly, the fire-extinguishing bombs are formed in the container and released from the container.

In some other embodiments, the mixing arrangement comprises a mixing chamber, a first supply element arranged to provide a supply of the solid liquid-absorbent preforms from the container to the mixing chamber, and a second supply element arranged to supply of fire-extinguishing liquid from the tank to the mixing chamber. The hatch is provided in fluid connection with the mixing chamber.

Accordingly, the fire-extinguishing bombs are formed in the mixing chamber and released from the mixing chamber.

In some embodiments, the mixing arrangement comprises a mixing device provided to the tank and arranged to mix the solid liquid-absorbent preforms and the fire-extinguishing liquid in the tank.

In some other embodiments, the mixing arrangement comprises a mixing device provided to the container and arranged to mix the solid liquid-absorbent preforms and the fire-extinguishing liquid in the container.

In some further embodiments, the mixing arrangement comprises a mixing device provided to the mixing chamber and arranged to mix the solid liquid-absorbent preforms and the fire-extinguishing liquid in the mixing chamber.

The mixing device and mixing of the solid liquid-absorbent preforms and the fire-extinguishing liquid may enhance absorption, thereby increasing the absorption rate.

In some embodiments, the aerial firefighting vehicle is an aeroplane.

In some other embodiments, the aerial firefighting vehicle is a helicopter.

In some further embodiments, the aerial firefighting vehicle is an unmanned aerial vehicle, such as a drone.

In some yet further embodiments, the aerial firefighting vehicle is electric vertical take-off and landing (eVTOL) aircraft.

An advantage of the invention is that the formed fire-extinguishing bombs retain the absorbed fire-extinguishing liquid preventing or decreasing evaporation of the liquid during the dropping towards the fire. The fire-extinguishing bombs further travel in a linear path due to the weight such that wind has a reduced effect on the travel towards the fire. Accordingly, more liquid may be provided to the actual fire with the method and aerial firefighting vehicle according to the present invention. The present invention may be used for preventing fires from advancing as well as for direct firefighting. The functional elements inside the fire-extinguishing bombs enable preparing the soil for new growth after the fire.

### BRIEF DESCRIPTION OF THE DRAWINGS

The invention is described in detail by means of specific embodiments with reference to the enclosed drawings, in which
Figure 1 shows prior art aerial firefighting;
Figure 2 depicts aerial firefighting according to one embodiment of the present invention;
Figures 3 to 5 show different embodiments of an aerial firefighting vehicle according to the present invention;
Figure 6 depicts aerial firefighting according to another embodiment of the present invention.;
Figure 7 schematically shows a solid firefighting preform according to an example not part of the present invention.
Figures 8 to 9 schematically show solid firefighting preforms according to the present invention.

### DETAILED DESCRIPTION OF THE INVENTION

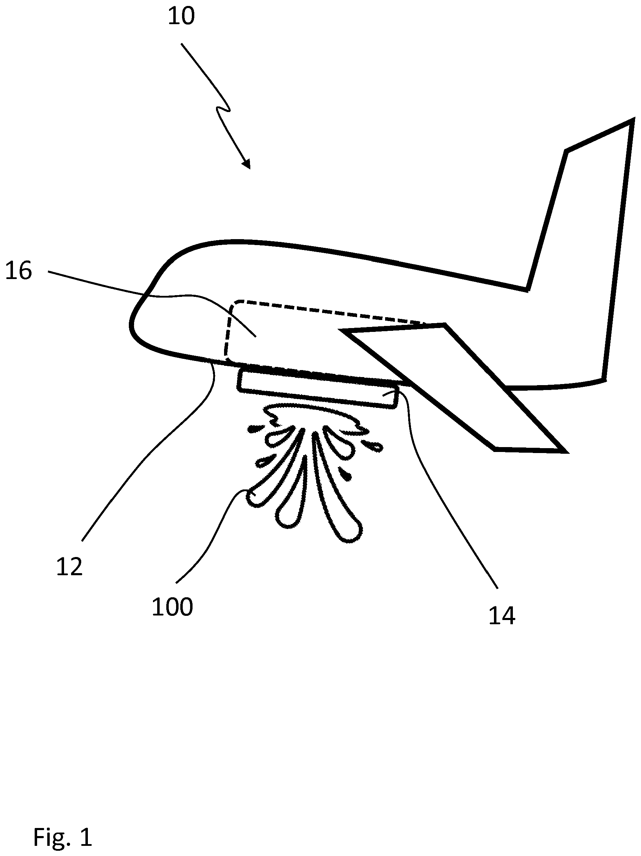

Figure 1 shows an aerial firefighting vehicle 10, which is a firefighting aeroplane. Figure 1 further shows a prior art method for aerial firefighting.

The aerial firefighting vehicle 10 comprises a tank 16 inside the vehicle 10 for holding or storing firefighting liquid or foam 100. The vehicle 10 further comprises a hatch 14 provided to the bottom wall or bottom 12 of the vehicle 10. The hatch 14 is provided in fluid communication with the tank 16 or in connection with the bottom wall of the tank 12.

The aerial firefighting vehicle 10 flies over the fire and opens the hatch 14 to drop the fire-extinguishing liquid or foam 100 to the fire from the vehicle 10. Accordingly, in prior art the fire-extinguishing material is dropped in a liquid or foam.

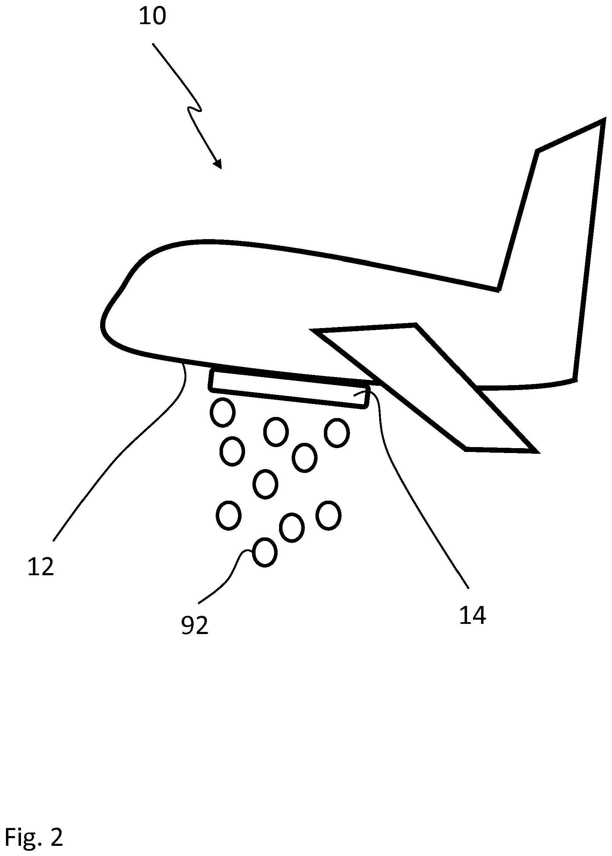

Figure 2 shows an aerial firefighting vehicle 10 according to the present invention. Figure 2 further illustrates an aerial firefighting method according to the present invention.

In the aerial firefighting method of the present invention fire-extinguishing bombs 92 are released from the aerial firefighting vehicle 10, as shown in figure 2. The fire-extinguishing bombs 92 are pieces or objects which are impregnated with fire-extinguishing liquid or which comprise absorbed fire-extinguishing liquid.

Accordingly, the fire-extinguishing bombs 92 retain fire-extinguishing liquid, and the fire-extinguishing liquid is not released from the vehicle in free liquid or foam form.

According to the present invention, the fire-extinguishing bombs 92 are formed in the aerial firefighting vehicle 10 from solid liquid-absorbent preforms. The fire-extinguishing bombs 92 are being formed by subjecting the solid liquid-absorbent preforms to the fire-extinguishing liquid such that the solid liquid-absorbent preforms absorb the fire-extinguishing liquid.

Accordingly, the solid liquid-absorbent preforms are formed as the fire-extinguishing bombs 92 by subjecting the solid liquid-absorbent preforms to the fire-extinguishing liquid.

The fire-extinguishing bombs 92 are formed in the vehicle 10.

Preferably, the fire-extinguishing bombs 92 are formed in the vehicle 10 during flight. This allows the forming of fire-extinguishing bombs each time after the fire-extinguishing liquid is loaded into the vehicle 10.

The fire-extinguishing bombs 92 are released or dropped from the vehicle 10 via the hatch 14. Accordingly, during aerial firefighting the aerial firefighting vehicle 10 flies over the fire and opens the hatch 14 to drop the fire-extinguishing bombs on the fire from the vehicle 10. Releasing and dropping of the fire-extinguishing bombs 92 is carried out by opening the hatch 14 over the fire.

As mentioned above the fire-extinguishing bombs 92 are formed or generated in the vehicle 10. Therefore, the aerial firefighting vehicle 10 comprises a mixing arrangement arranged to subject the solid liquid-absorbent preforms to the fire-extinguishing liquid such that the solid liquid-absorbent preforms absorb the fire-extinguishing liquid for generating the fire-extinguishing bomb 92 in the vehicle 10.

The solid liquid-absorbent preforms 90 comprise material having liquid absorption weight ratio of at least 10 g of liquid per 1 g of the material of the solid liquid-absorbent preforms 90 and liquid absorption swelling ratio of at least 10 times the volume of the liquid-absorbent solid preforms 90. Accordingly, the solid liquid-absorbent preforms 90 are made of or comprise superabsorbent material, such as hydrogel material.

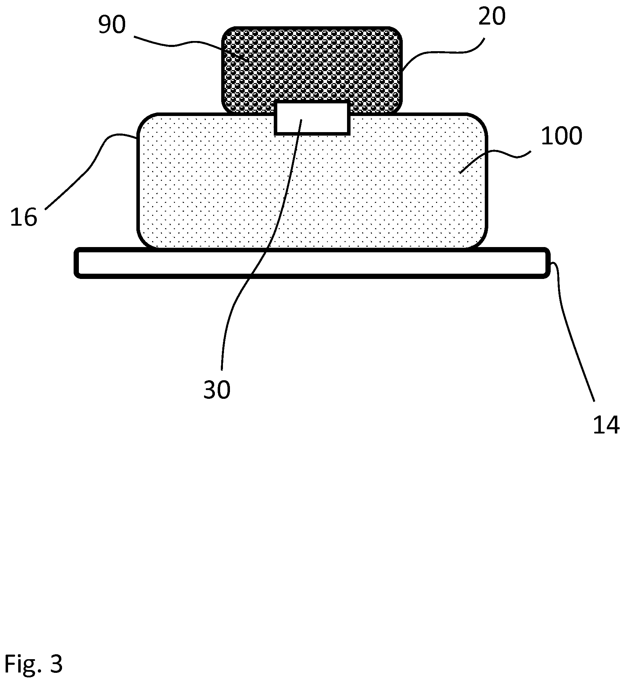

Figure 3 shows one embodiment of the present invention and the mixing arrangement arranged to subject the solid liquid-absorbent preforms 90 to the fire-extinguishing liquid.

The aerial firefighting vehicle 10 comprises a tank 16 arranged to hold fire-extinguishing liquid 100. The vehicle 10 further comprises the hatch 14 or release hatch 14. The hatch 14 provided in fluid connection with the tank 16 or in connection with the tank 16.

The vehicle 10 further comprises a container 20 arranged to hold solid liquid-absorbent preforms 90.

The solid liquid-absorbent preforms 90 are provided in the container 20 as powder material, or as granule material, or as separate preform blanks.

As shown in figure 3, the container 20 is arranged in connection with the tank 16 or the container 20 is connected to the tank 16 such that the solid liquid-absorbent preforms 90 may be provided from the container 20 to the tank 16 for subjecting the solid liquid-absorbent preforms 90 to the fire-extinguishing liquid 100.

The mixing arrangement further comprises a preform supply element 30 arranged to provide a supply of the solid liquid-absorbent preforms 90 from the container 20 to the tank 16.

The preform supply element 30 is arranged between the container 20 and the tank 16. The preform supply element 30 may comprise a door, or a closing mechanism arranged to be placed in an open position for supplying solid liquid-absorbent preforms 90 from the container 20 to the tank 16 and to an open position in which supply of the solid liquid-absorbent preforms 90 from the container 20 to the tank 16 is prevented.

Accordingly, the preform supply element 30 is arranged to provide supply connection from the container 20 to the tank 16. Thus, the fire-extinguishing bombs 92 are formed in the tank 16.

In the embodiment of figure 3, the container 20 is provided above the tank 16 in the vehicle 10. Thus, gravity may be utilized in supplying the solid liquid-absorbent preforms 90 from the container 20 to the tank 16.

In an alternative embodiment, the container 20 may also be arranged adjacent the tank 16.

The hatch 14 is provided to the tank 16 or in connection with tank 16. The fire-extinguishing bombs 92 are formed in the tank 16, and they are released directly from the tank 16 by opening the hatch 14.

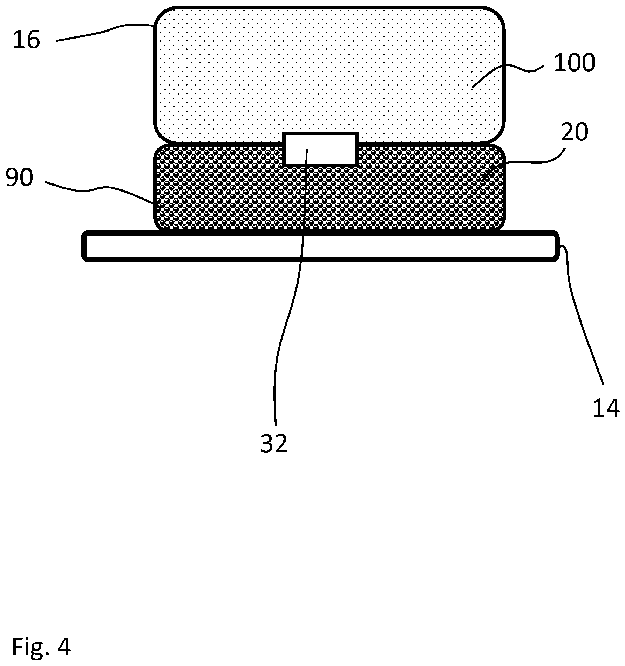

Figure 4 shows another embodiment of the present invention and the mixing arrangement arranged to subject the solid liquid-absorbent preforms 90 to the fire-extinguishing liquid 100.

The aerial firefighting vehicle 10 comprises the tank 16 arranged to hold fire-extinguishing liquid 100.

The vehicle 10 further comprises a container 20 arranged to hold solid liquid-absorbent preforms 90. The vehicle 10 further comprises the hatch 14 or release hatch 14. The hatch 14 provided in fluid connection with the container 20 or in connection with the container 20.

The solid liquid-absorbent preforms 90 are provided in the container 20 as powder material, or as granule material, or as separate preform blanks.

As shown in figure 4, the tank 16 is arranged in connection with the container 20 or the tank 16 is connected to the container 20 such that fire-extinguishing liquid 100 may be provided from the tank 16 to the container 20 for subjecting the solid liquid-absorbent preforms 90 to the fire-extinguishing liquid 100.

The mixing arrangement further comprises a liquid supply element 32 arranged to provide a supply of the fire-extinguishing liquid 100 from the tank 16 to the container 20.

The liquid supply element 32 is arranged between the tank 16 and the container 20. The liquid supply element 32 may comprise a door, valve or a closing mechanism arranged to be placed in an open position for supplying fire-extinguishing liquid 100 from the tank 16 to the container 20 and to an open position in which supply of the fire-extinguishing liquid 100 from the tank 16 to the container 20 is prevented.

Accordingly, the liquid supply element 32 is arranged to provide supply connection from the tank 16 to the container 20. Thus, the fire-extinguishing bombs 92 are formed in the container 20.

In the embodiment of figure 4, the tank 16 is provided above the container 20 in the vehicle 10. Thus, gravity may be utilized in supplying the fire-extinguishing liquid 100 from the tank 16 to the container 20.

In an alternative embodiment, the tank 16 may also be arranged adjacent the container 20. The mixing arrangement may also be provided with a pump (not shown) for supplying fire-extinguishing liquid 100 from the tank 16 to the container 20.

The hatch 14 is provided to the container 20 or in connection with container 20. The fire-extinguishing bombs 92 are formed in the container 20, and they are released directly from the container 20 by opening the hatch 14.

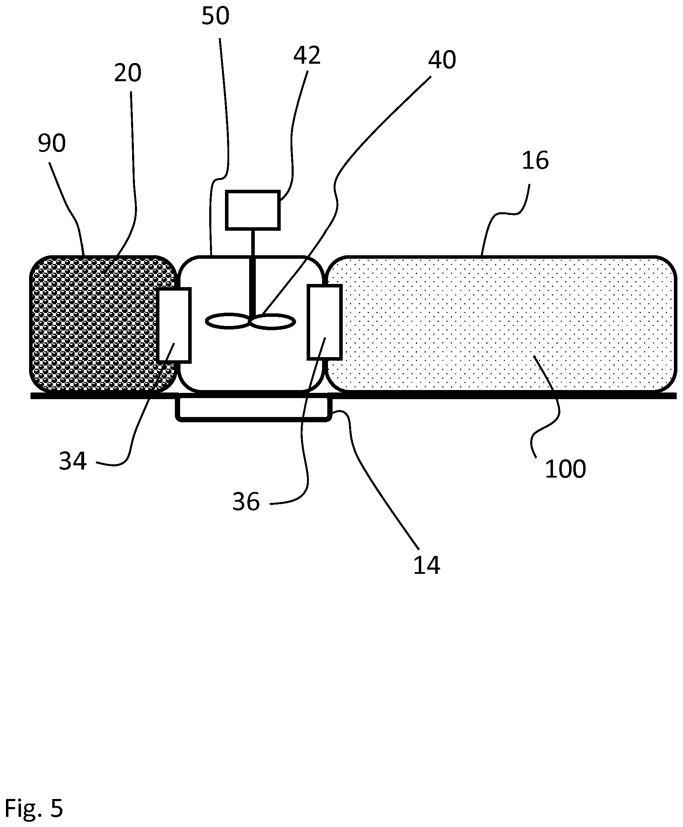

Figure 5 shows yet another embodiment of the present invention, and the mixing arrangement disposed to subject the solid liquid-absorbent preforms 90 to the fire-extinguishing liquid 100.

The aerial firefighting vehicle 10 comprises the tank 16 arranged to hold fire-extinguishing liquid 100.

The vehicle 10 further comprises a container 20 arranged to hold solid liquid-absorbent preforms 90.

The solid liquid-absorbent preforms 90 are provided in the container 20 as powder material, or as granule material, or as separate preform blanks. The vehicle 10 also comprises a separate mixing chamber 50.

As shown in figure 5, the tank 16 is arranged in connection with the mixing chamber 50 or the tank 16 is connected to the mixing chamber 50 such that fire-extinguishing liquid 100 may be provided from the tank 16 to the mixing chamber 50. Further, the container 20 is arranged in connection with the mixing chamber 50 or the container 20 is connected to the mixing chamber 50 such that the solid liquid-absorbent preforms 90 may be provided from the container 20 to the mixing chamber 50.

Accordingly, the solid liquid-absorbent preforms 90 are subjected to the fire-extinguishing liquid 100 in the mixing chamber 50 when both the solid liquid-absorbent preforms 90 and the fire-extinguishing liquid 100 are provided to the mixing chamber 50 for forming the fire-extinguishing bombs 92.

The vehicle 10 further comprises the hatch 14 or release hatch 14. The hatch 14 is provided in fluid connection with the mixing chamber 50 or in connection with the mixing chamber 50.

The mixing arrangement comprises a first supply element 34 arranged to provide a supply of the solid liquid-absorbent preforms 90 from the container 20 to the mixing chamber 50. The first supply element 34 is arranged between the container 20 and the mixing chamber 50. The first supply element 34 may comprise a door or a closing mechanism arranged to be placed in an open position for supplying solid liquid-absorbent preforms 90 from the container 20 to the mixing chamber 50 and to an open position in which supply of the solid liquid-absorbent preforms 90 from the container 20 to the mixing chamber 50 is prevented. Accordingly, the first supply element 34 is arranged to provide a supply connection from the container 20 to the mixing chamber 50.

The mixing arrangement comprises a second supply element 36 arranged to provide a supply of the fire-extinguishing liquid 100 from the tank 16 to the mixing chamber 50. The second supply element 36 is arranged between the tank 16 and the mixing chamber 50. The second supply element 36 may comprise a door, a valve or a closing mechanism arranged to be placed in an open position for supplying fire-extinguishing liquid 100 from the tank 16 to the mixing chamber 50 and to an open position in which supply of the fire-extinguishing liquid 100 from the tank 16 to the mixing chamber 50 is prevented. Accordingly, the second supply element 36 is arranged to provide a supply connection from the tank 16 to the mixing chamber 50.

Thus, the fire-extinguishing bombs 92 are formed in the mixing chamber 50.

In the embodiment of figure 5, the tank 16 and the container 20 are arranged adjacent to the mixing chamber 50 in the vehicle 10.

Alternatively, the tank 16 and/or the container 20 are provided above the mixing chamber 50 in the vehicle 10. Thus, gravity may be utilized in supplying the fire-extinguishing liquid 100 and/or the solid liquid-absorbent preforms 90 from the tank 16 and/or container 20 to the mixing chamber 50.

The hatch 14 is provided to the mixing chamber 50 or in connection with the mixing chamber 50. The fire-extinguishing bombs 92 are formed in the mixing chamber 50, and they are released directly from the mixing chamber 50 by opening the hatch 14.

In the embodiment of figure 5, the mixing arrangement further comprises a mixing device 40, 42 provided to the mixing chamber 50 and arranged to mix the solid liquid-absorbent preforms 90 and the fire-extinguishing liquid 100 in the mixing chamber 50.

In the embodiment of figure 5, the mixing device comprises a propeller 40 connected to a power source 42. However, a blower or the like may also be used as a mixing device 40 in an alternative embodiment.

The mixing device 40, 42 may also be provided to the tank 16 and arranged to mix the solid liquid-absorbent preforms 90 and the fire-extinguishing liquid 100 in the tank 16 in the embodiment of figure 3.

The mixing device 40, 42 may also be provided to the container 20 and arranged to mix the solid liquid-absorbent preforms 90 and the fire-extinguishing liquid 100 in the container 20 in the embodiment of figure 4.

The tank 16 is provided inside the aerial firefighting vehicle 10.

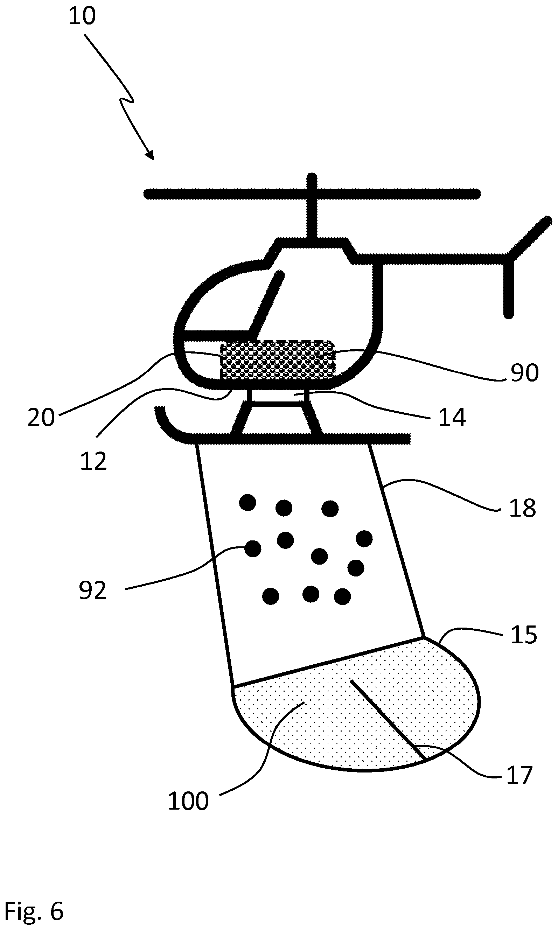

Figure 6 shows another prior art method for aerial firefighting with an aerial firefighting vehicle 10. In this embodiment the aerial vehicle is a helicopter 10. Further, in this embodiment a liquid bag 15 is provided for holding the fire-extinguishing liquid 100. The liquid bag 15 is connected to the vehicle 10 with holding elements 18, such as holding cords so that the liquid bag 15 is supported under the vehicle 10. The liquid bag 15 is arranged to form the tank 16 for holding the fire-extinguishing liquid 100.

The vehicle 10 further comprises the container 20 arranged to hold solid liquid-absorbent preforms 90. The vehicle 10 further comprises the hatch 14 or release hatch 14. The hatch 14 is provided in fluid connection with the container 20 or in connection with the container 20.

The solid liquid-absorbent preforms 90 are provided in the container 20 as powder material, or as granule material, or as separate preform blanks.

As shown in figure 6, the liquid bag 15 is arranged and supported below the vehicle 10 and below the hatch 14 in a way that the solid liquid-absorbent preforms 90 may be provided from the container 20 into the fluid bag 15 by opening the hatch 14. In this embodiment, the hatch corresponds to the preform supply element 30 of figure 3. Thus, the hatch 14 may comprise a door or a closing mechanism arranged to be placed in an open position for supplying the solid liquid-absorbent preforms 90 from the container 20 to the liquid bag 15 and to an open position in which supply of the solid liquid-absorbent preforms 90 from the container 20 to the liquid bag 15 is prevented. The liquid bag 15 is arranged outside the aerial firefighting vehicle 10.

Accordingly, the fire-extinguishing bombs 92 are formed in the liquid bag 15.

The liquid bag 15 is further provided with a bag hatch 17 for opening the liquid bag 15 and releasing and dropping the fire-extinguishing bombs 92 to fire.

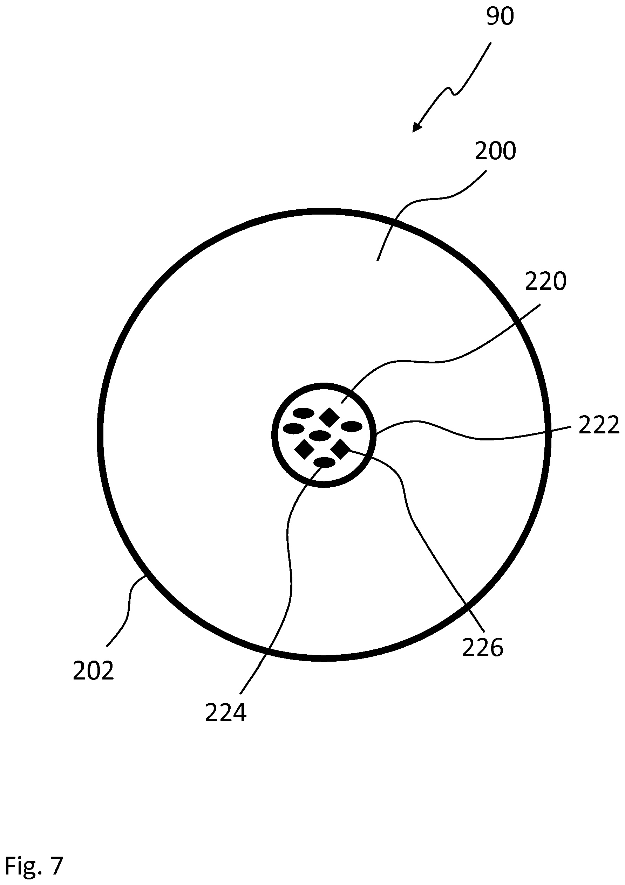

Figure 7 shows a section view or a cross-sectional view of a solid firefighting preform 90 comprising a liquid-absorbent layer 200. The liquid-absorbing layer 200 comprises swellable liquid absorbing material arranged to absorb fire-extinguishing liquid. The liquid-absorbing layer 200 forms the outer surface 202, and the outer layer of the solid firefighting preform 90. The solid firefighting preforms 90 further comprises a nucleus layer 220 provided inside the liquid absorbing layer 200. The nucleus layer 220 comprising one or more functional elements 224, 226 configured to interact with soil. Accordingly, the liquid absorbing layer 200 is arranged to encapsulate the nucleus layer 220.

The nucleus layer 220 comprises a nucleus layer surface 222 as the outer surface of the nucleus layer 220.

The functional elements comprise plant seeds 224 and fertilizers 226 or fertilizer particles 226. Both the seeds 224 and the fertilizers are configured to interact with the soil.

In some embodiments, the fertilizers 226 comprise one or more of Nitrogen (N), Potassiun (K), and Phosphorus (P).

The fertilizers are provided as solid fertilizer particles or as liquid fertilizer solutions into which the fertilizer materials are dissolved.

In some embodiments, the nucleus layer comprises water absorbed to the nucleus layer 220 or fertilizing liquid or some other chemical solution.

The liquid absorbing layer 200 is typically made of or comprises hydrogel or superabsorbent material, or superabsorbent polymer material, or cellulose-based superabsorbent material, or hydrogel-based material, or hydrogel-derived material. Therefore, the liquid absorbing layer 200 is arranged to absorb fire-extinguishing liquid and swell upon absorbing fire-extinguishing material. In some embodiments, the liquid absorbing layer 200 is provided as gel-material layer after the fire-extinguishing material absorbed into the liquid absorbing layer 200.

The liquid absorbing layer 200 is provided for impaction with fire and provides as much water or other fire-extinguishing liquid as possible onto the flames while avoiding liquid evaporation during dropping before reaching the ground.

The nucleus layer 220 is preferably formed as a biodegradable layer or a biodegradable capsule. The biodegradable layer of capsule is configured to release the functional elements 224, 226 during the natural decomposition of the biodegradable layer or capsule material.

The nucleus layer 220 may comprise or be composed of a biodegradable material, a bio-based polymer, a biodegradable polymeric material, or the like. The nucleus layer 220 may alternatively comprise a combination of at least two of the following: a biodegradable material, a bio-based polymer, and a biodegradable polymeric material biodegradable material.

In some embodiments, the material the nucleus layer 220 is made of or comprises liquid-absorbent material, a liquid-absorbent biodegradable material, a liquid-absorbent bio-based polymer, a liquid-absorbent biodegradable polymeric material

The nucleus layer 220 is configured to decompose by biodegradation with material fragmentation, shortening and weakening of polymer chains under the influence of heat, moisture, sunlight, and/or enzymes. The nucleus layer is further or alternatively configured to decompose by biodegradation with material mineralization, thereby enabling the complete assimilation of fragments by the microbial population in the soil.

Viscosity and/or hardness of the nucleus layer 220 is preferably higher than liquid absorbing layer 200 after the fire-extinguishing liquid is absorbed into the liquid absorbing layer 200.

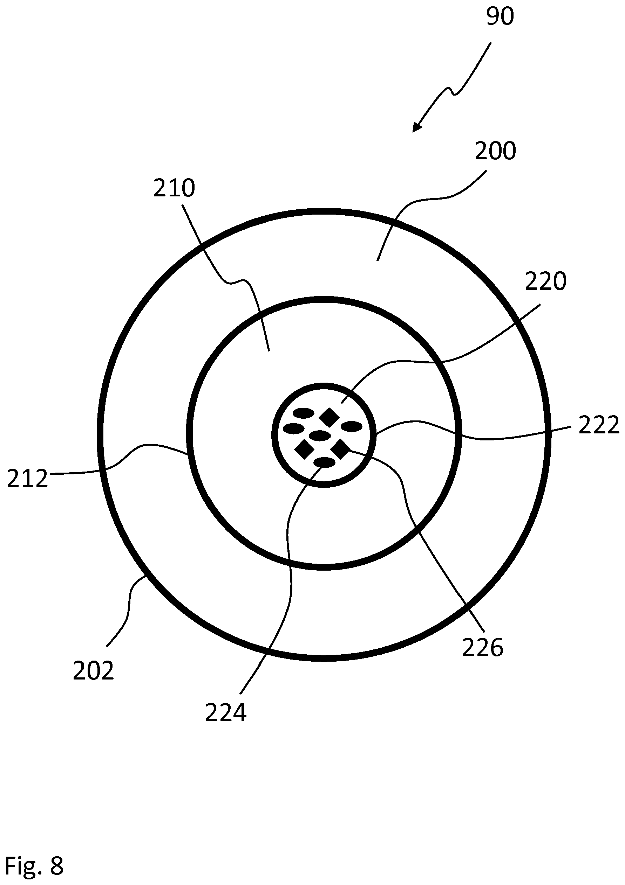

Figure 8 shows a section view of an embodiment of the invention, in which the solid firefighting preform 90 comprises a middle layer 210 provided between the liquid-absorbent layer 200 and the nucleus layer 220, the middle layer 210 comprising fire-retardant material. The liquid-absorbent layer 200 is arranged to surround or encapsulate the middle layer 210. The middle layer 210 is arranged to surround or encapsulate the nucleus layer 220.

The middle layer 210 comprises biodegradable fire-retardant material or biodegradable fire-retardant polymer material. Accordingly, the middle layer is arranged to protect the nucleus layer 220 from the fire.

The middle layer 210 comprises an outer surface 212 towards the liquid-absorbent layer 200.

In some embodiments, the middle layer 210 is provided with liquid-absorbent material arranged to absorb or be impregnated with fire-extinguishing or fire-retardant fluids, foams, or chemicals.

The fire-retardant materials are preferably organic or inorganic biodegradable fire-retardant polymers.

The middle layer 210 may comprise or be made of biodegradable, biocompatible, and renewable material. The material of the middle layer 210 may comprise or be formed, for example, from polylactide or thermoplastic polyester.

In some embodiments, the middle layer 210 is formed as a solid layer, a gel-material layer, or a foam layer.

Viscosity and/or hardness of the middle layer is preferably higher than liquid absorbing layer 200 after the fire-extinguishing liquid is absorbed into the liquid absorbing layer 200.

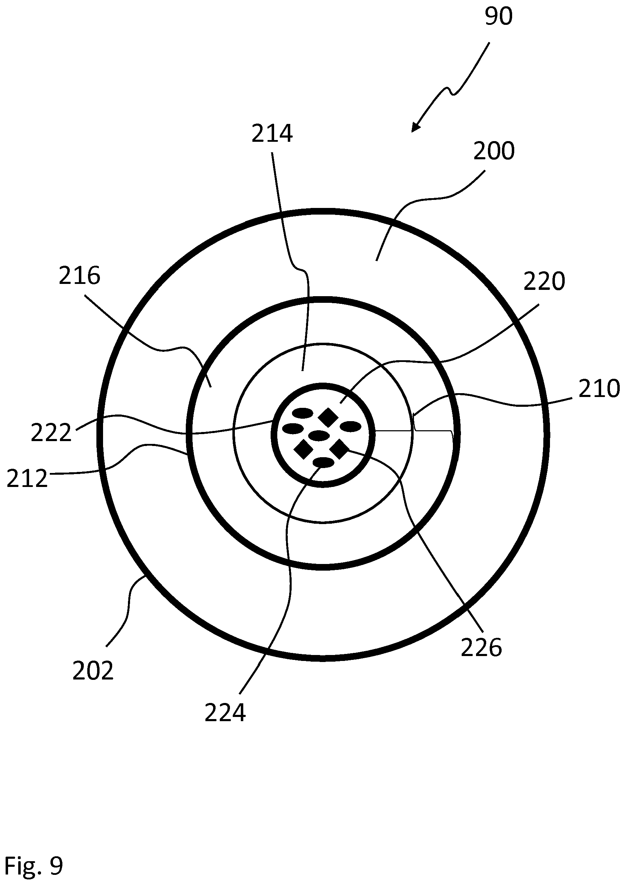

Figure 9 shows a section view of a further embodiment of the solid firefighting preform 92 in which the middle layer 210 of figure 8 comprises a first middle layer 216 and a second middle layer 214.

The first middle layer 216 is arranged between the liquid-absorbing layer 200 and the second middle layer 214. The second middle layer 214 is arranged between the first middle layer 216 and the nucleus layer 220.

The first and second middle layers 216 and 214 enable providing different functional properties for the overall middle layer 210.

In one embodiment, the first middle layer 216 comprises liquid absorbing material arranged to absorb fire-extinguishing liquid 100, and the second middle layer 214 comprises fire-retardant material.

In another embodiment, the first middle layer 216 comprises fire-retardant material, and the second middle layer 214 comprises liquid absorbing material arranged to absorb or is impregnated with plant growing liquid. The plant growing liquid may be for example water or liquid comprising fertilizers or chemicals.

The solid firefighting preforms 90 or the fire-extinguishing bombs 92 are provided as round, elliptical, spherical, polygonal or cubical preforms 90 or bombs 92.

The solid firefighting preforms 90 are provided as three-dimensional preforms in which the nucleus layer 220 is arranged inside the liquid-absorbing layer 200 in a nested manner. Further, the solid firefighting preforms 90 are provided as three-dimensional preforms in which the nucleus layer 220 is arranged inside the middle layer 210 and the liquid-absorbing layer 200 in a nested manner, and the middle layer 210 is arranged inside the liquid-absorbing layer 200 in a nested manner.

A spherical shape is preferred as it enables carrying out the dropping with ballistic precision due to the spherical shape.

The invention has been described above with reference to the examples shown in the figures. However, the invention is in no way restricted to the above examples but may vary within the scope of the claims.

## Claims

1. A solid firefighting preform (90), the solid firefighting preform (90) comprises:
- liquid-absorbent layer (200), the liquid-absorbing layer (200) comprising swellable liquid absorbing material arranged to absorb fire-extinguishing liquid (100); and
- a nucleus layer (220) provided inside the liquid absorbing layer (200), the nucleus layer (220) comprising one or more functional elements (224, 226) configured to interact with soil,
**characterized in that** the solid firefighting preform (90) comprises a middle layer (210) provided between the liquid-absorbent layer (200) and the nucleus layer (220), the middle layer (210) comprising fire-retardant material.

2. A solid firefighting preform (90) according to claim 1, **characterized in that** the liquid-absorbent layer (220) comprises material having liquid absorption weight ratio:
- at least 10 g of liquid per 1 g of the material of the solid liquid-absorbent preforms (90); or
- at least 50 g of liquid per 1 g of the material of the solid liquid-absorbent preforms (90); or
- at least 100 g of liquid per 1 g of the material of the solid liquid-absorbent preforms (90); or
- at least 200 g of liquid per 1 g of the material of the solid liquid-absorbent preforms (90).

3. A solid firefighting preform (90) according to claim 1 or 2, **characterized in that** the liquid-absorbent layer (200) comprises material having liquid absorption swelling ratio:
- at least 10 times the volume of the liquid-absorbent solid preforms (90); or
- at least 25 times the volume of the liquid-absorbent solid preforms (90); or
- at least 50 times the volume of the liquid-absorbent solid preforms (90).

4. A solid firefighting preform (90) according to any one of claims 1 to 3, **characterized in that** the liquid-absorbent layer (200) is made of, or comprises:
- superabsorbent material; or
- superabsorbent polymer material; or
- cellulose-based superabsorbent material; or
- hydrogel-based or hydrogel-derived material.

5. A solid firefighting preform (90) according to any one of claims 1 to 4, **characterized in that** the one or more functional elements (224, 226) of the nucleus layer (220) comprise:
- one or more plant seeds (224); or
- fertilizer material (226); or
- fertilizer material (226) and one or more plant seeds (224).

6. A solid firefighting preform (90) according to any one of claims 1 to 5, **characterized in that** the nucleus layer (220) comprises:
- biodegradable material, the one or more functional elements (224, 226) being provided inside biodegradable material; or
- bio-based polymer material, the one or more functional elements (224, 226) being provided inside bio-based polymer material; or
- biodegradable polymer material, the one or more functional elements (224, 226) being provided inside biodegradable polymer material; or
- combination of at least two of the following: biodegradable material, bio-based polymer material and biodegradable polymer material, the one or more functional elements (224, 226) being provided inside the nucleus layer (220).

7. A solid firefighting preform (90) according to any one of claims 1 to 6, **characterized in that** the middle layer (210) comprises:
- biodegradable fire-retardant material; or
- biodegradable fire-retardant polymer material.

8. A solid firefighting preform (90) according to any one of claims 1 to 7, **characterized in that** the middle layer (210) comprises a first middle layer (216) and a second middle layer (214), the first middle layer (216) is arranged between the liquid-absorbent layer (200) and the second middle layer (214), the second middle layer (214) is arranged between the first middle layer (216) and the nucleus layer (220), and that:
- the first middle layer (216) comprises liquid absorbing material arranged to absorb fire-extinguishing liquid (100), and the second middle layer (214) comprises fire-retardant material; or
- the first middle layer (216) comprises fire-retardant material, and the second middle layer (214) comprises liquid absorbing material arranged to absorb plant-growing liquid; or
- the first middle layer (216) comprises fire-retardant material, and the second middle layer (214) comprises liquid absorbing material impregnated with plant-growing liquid.

9. A method in aerial firefighting with an aerial vehicle (10), **characterized in that** the method comprises:
- providing fire-extinguishing liquid (100) in the aerial vehicle (10); and
- maintaining solid liquid-absorbent preforms (90) in the aerial vehicle (10),
the solid liquid-absorbent preforms (90) comprise:
- liquid-absorbent layer (200), the liquid-absorbing layer (200) comprising swellable liquid absorbing material arranged to absorb fire-extinguishing liquid (100); and
- a nucleus layer (220) provided inside the liquid absorbing layer (200), the nucleus layer (220) comprising one or more functional elements (224, 226) configured to interact with soil,
the method further comprises:
- subjecting at least part of the solid liquid-absorbent preforms (90) to the fire-extinguishing liquid (100) in the aerial vehicle (10) such that the liquid-absorbing layers (200) of solid liquid-absorbent preforms (90) absorb the fire-extinguishing liquid (100) to form fire-extinguishing bombs (92) from the solid liquid-absorbent preforms (90), the liquid-absorbent layer (200) of the fire-extinguishing bombs (92) being impregnated with the fire-extinguishing liquid (100); and
- releasing the fire-extinguishing bombs (92) having the liquid-absorbent layer (200) surrounding the nucleus layer (220) impregnated with the fire-extinguishing liquid (100) from the aerial vehicle (10) for extinguishing or mitigating fire with the fire-extinguishing bombs (92),
**characterized in that** the solid firefighting preform (90) comprises a middle layer (210) provided between the liquid-absorbent layer (200) and the nucleus layer (220), the middle layer (210) comprising fire-retardant material.

10. A method according to any claim 9, **characterized in that**:
- the solid liquid-absorbent preforms (90) are provided as granule material, in which separate the solid liquid-absorbent preforms (90) have particle diameter between 1 to 10 mm; or
- the solid liquid-absorbent preforms (90) are provided as separate preform blanks having a diameter between 10 to 100 mm.

11. A method according to claim 9 or 10, **characterized in that**:
- the solid liquid-absorbent preforms (90) are subjected to the fire-extinguishing liquid (100) for an absorption time for forming the fire-extinguishing bombs (92) before releasing the fire-extinguishing bombs (92) from the aerial vehicle (10), the absorption time being between 0 to 60 s; or
- the solid liquid-absorbent preforms (90) are subjected to the fire-extinguishing liquid (100) for an absorption time for forming the fire-extinguishing bombs (92) before releasing the fire-extinguishing bombs (92) from the aerial vehicle (10), the absorption time being between 1 to 5 min; or
- the solid liquid-absorbent preforms (90) are subjected to the fire-extinguishing liquid (100) for an absorption time for forming the fire-extinguishing bombs (92) before releasing the fire-extinguishing bombs (92) from the aerial vehicle (10), the absorption time being between 5 to 10 min; or
- the solid liquid-absorbent preforms (90) are subjected to the fire-extinguishing liquid (100) for an absorption time for forming the fire-extinguishing bombs (92) before releasing the fire-extinguishing bombs (92) from the aerial vehicle, the absorption time being between 10 to 30 min.

12. A method according to any one of claims 9 to 11, **characterized in that** the solid liquid-absorbent preforms (90) are solid liquid-absorbent preforms (90) according to any one of claims 1 to 8.

## Patentansprüche

1. Feste Brandbekämpfungsvorform (90), die feste Brandbekämpfungsvorform (90) umfassend:
- eine flüssigkeitsabsorbierende Schicht (200), wobei die flüssigkeitsabsorbierende Schicht (200) ein quellfähiges flüssigkeitsabsorbierendes Material umfasst, das dazu angeordnet ist, eine Brandlöschflüssigkeit (100) zu absorbieren; und
- eine im Inneren der flüssigkeitsabsorbierenden Schicht (200) bereitgestellte Keimschicht (220), wobei die Keimschicht (220) ein oder mehrere Funktionselemente (224, 226) umfasst, die dazu konfiguriert sind, mit dem Boden zu interagieren,
**gekennzeichnet dadurch, dass** die feste Brandbekämpfungsvorform (90) eine zwischen der flüssigkeitsabsorbierenden Schicht (200) und der Keimschicht (220) bereitgestellte Mittelschicht (210) umfasst, wobei die Mittelschicht (210) ein brandhemmendes Material umfasst.

2. Feste Brandbekämpfungsvorform (90) nach Anspruch 1, **gekennzeichnet dadurch, dass** die flüssigkeitsabsorbierende Schicht (220) Material umfasst, das das folgende Flüssigkeitsabsorptionsgewichtsverhältnis aufweist:
- mindestens 10 g Flüssigkeit pro 1 g Material der festen flüssigkeitsabsorbierenden Vorformen (90); oder
- mindestens 50 g Flüssigkeit pro 1 g Material der festen flüssigkeitsabsorbierenden Vorformen (90); oder
- mindestens 100 g Flüssigkeit pro 1 g Material der festen flüssigkeitsabsorbierenden Vorformen (90); oder
- mindestens 200 g Flüssigkeit pro 1 g Material der festen flüssigkeitsabsorbierenden Vorformen (90).

3. Feste Brandbekämpfungsvorform (90) nach Anspruch 1 oder 2, **gekennzeichnet dadurch, dass** die flüssigkeitsabsorbierende Schicht (200) Material umfasst, das das folgende Flüssigkeitsabsorptionsquellverhältnis aufweist:
- mindestens das 10-fache Volumen der flüssigkeitsabsorbierenden festen Vorformen (90); oder
- mindestens das 25-fache Volumen der flüssigkeitsabsorbierenden festen Vorformen (90); oder
- mindestens das 50-fache Volumen der flüssigkeitsabsorbierenden festen Vorformen (90).

4. Feste Brandbekämpfungsvorform (90) nach einem der Ansprüche 1 bis 3, **gekennzeichnet dadurch, dass** die flüssigkeitsabsorbierende Schicht (200) aus Folgendem hergestellt ist oder Folgendes umfasst:
- superabsorbierendes Material; oder
- superabsorbierendes Polymermaterial; oder
- zellulosebasiertes superabsorbierendes Material; oder
- Hydrogel-basiertes oder aus Hydrogel abgeleitetes Material.

5. Feste Brandbekämpfungsvorform (90) nach einem der Ansprüche 1 bis 4, **gekennzeichnet dadurch, dass** das eine oder die mehreren Funktionselemente (224, 226) der Keimschicht (220) Folgendes umfassen:
- einen oder mehrere Pflanzensamen (224); oder
- Düngemittelmaterial (226); oder
- Düngemittelmaterial (226) und einen oder mehrere Pflanzensamen (224).

6. Feste Brandbekämpfungsvorform (90) nach einem der Ansprüche 1 bis 5, **gekennzeichnet dadurch, dass** die Keimschicht (220) Folgendes umfasst:
- biologisch abbaubares Material, wobei das eine oder die mehreren Funktionselemente (224, 226) im Inneren des biologisch abbaubaren Materials bereitgestellt sind; oder
- biobasiertes Polymermaterial, wobei das eine oder die mehreren Funktionselemente (224, 226) im Inneren des biobasierten Polymermaterials bereitgestellt sind; oder
- biologisch abbaubares Polymermaterial, wobei das eine oder die mehreren Funktionselemente (224, 226) im Inneren des biologisch abbaubaren Polymermaterials bereitgestellt sind; oder
- eine Kombination von mindestens zwei der Folgenden: biologisch abbaubarem Material, biobasiertem Polymermaterial und biologisch abbaubarem Polymermaterial, wobei das eine oder die mehreren Funktionselemente (224, 226) im Inneren der Keimschicht (220) bereitgestellt sind.

7. Feste Brandbekämpfungsvorform (90) nach einem der Ansprüche 1 bis 6, **gekennzeichnet dadurch, dass** die Mittelschicht (210) Folgendes umfasst:
- biologisch abbaubares brandhemmendes Material; oder
- biologisch abbaubares brandhemmendes Polymermaterial.

8. Feste Brandbekämpfungsvorform (90) nach einem der Ansprüche 1 bis 7, **gekennzeichnet dadurch, dass** die Mittelschicht (210) eine erste Mittelschicht (216) und eine zweite Mittelschicht (214) umfasst, die erste Mittelschicht (216) zwischen der flüssigkeitsabsorbierenden Schicht (200) und der zweiten Mittelschicht (214) angeordnet ist, die zweite Mittelschicht (214) zwischen der ersten Mittelschicht (216) und der Keimschicht (220) angeordnet ist, und **dadurch**, dass:
- die erste Mittelschicht (216) flüssigkeitsabsorbierendes Material umfasst, das dazu angeordnet ist, Brandlöschflüssigkeit (100) zu absorbieren und die zweite Mittelschicht (214) ein brandhemmendes Material umfasst; oder
- die erste Mittelschicht (216) brandhemmendes Material umfasst, und die zweite Mittelschicht (214) flüssigkeitsabsorbierendes Material umfasst, das dazu angeordnet ist, Pflanzenwachstumsflüssigkeit zu absorbieren; oder
- die erste Mittelschicht (216) brandhemmendes Material umfasst, und die zweite Mittelschicht (214) flüssigkeitsabsorbierendes Material umfasst, das mit Pflanzenwachstumsflüssigkeit imprägniert ist.

9. Verfahren zum Brandbekämpfen aus der Luft mit einem Luftfahrzeug (10), **gekennzeichnet dadurch, dass** das Verfahren Folgendes umfasst:
- Bereitstellen einer Brandlöschflüssigkeit (100) in dem Luftfahrzeug (10); und
- Bereithalten von festen flüssigkeitsabsorbierenden Vorformen (90) in dem Luftfahrzeug (10),
die festen flüssigkeitsabsorbierenden Vorformen (90) Folgendes umfassen:
- eine flüssigkeitsabsorbierende Schicht (200), wobei die flüssigkeitsabsorbierende Schicht (200) ein quellfähiges flüssigkeitsabsorbierendes Material umfasst, das dazu angeordnet ist, eine Brandlöschflüssigkeit (100) zu absorbieren; und
- eine im Inneren der flüssigkeitsabsorbierenden Schicht (200) bereitgestellte Keimschicht (220), wobei die Keimschicht (220) ein oder mehrere Funktionselemente (224, 226) umfasst, die dazu konfiguriert sind, mit dem Boden zu interagieren,
das Verfahren ferner Folgendes umfasst:
- Aussetzen mindestens eines Teils der festen flüssigkeitsabsorbierenden Vorformen (90) gegenüber der Brandlöschflüssigkeit (100) in dem Luftfahrzeug (10), sodass die flüssigkeitsabsorbierenden Schichten (200) der festen flüssigkeitsabsorbierenden Vorformen (90) die Brandlöschflüssigkeit (100) absorbieren, um Brandlöschbomben (92) aus den festen flüssigkeitsabsorbierenden Vorformen (90) auszubilden, wobei die flüssigkeitsabsorbierende Schicht (200) der Brandlöschbomben (92) mit der Brandlöschflüssigkeit (100) imprägniert ist; und
- Abwerfen der Brandlöschbomben (92), die die flüssigkeitsabsorbierende Schicht (200) aufweisen, die die mit der Brandlöschflüssigkeit (100) imprägnierte Keimschicht (220) umgibt, aus dem Luftfahrzeug (10) zum Löschen oder Mindern eines Brandes mit den Brandlöschbomben (92),
**gekennzeichnet dadurch, dass** die feste Brandbekämpfungsvorform (90) eine zwischen der flüssigkeitsabsorbierenden Schicht (200) und der Keimschicht (220) bereitgestellte Mittelschicht (210) umfasst, wobei die Mittelschicht (210) ein brandhemmendes Material umfasst.

10. Verfahren nach Anspruch 9, **gekennzeichnet dadurch, dass**:
- die festen flüssigkeitsabsorbierenden Vorformen (90) als Granulatmaterial bereitgestellt sind, in dem die einzelnen festen flüssigkeitsabsorbierenden Vorformen (90) einen Partikeldurchmesser von 1 bis 10 mm aufweisen; oder
- die festen flüssigkeitsabsorbierenden Vorformen (90) als einzelne Vorformrohlinge bereitgestellt sind, die einen Durchmesser von 10 bis 100 mm aufweisen.

11. Verfahren nach Anspruch 9 oder 10, **gekennzeichnet dadurch, dass**:
- die festen flüssigkeitsabsorbierenden Vorformen (90) über eine Absorptionszeit der Brandlöschflüssigkeit (100) ausgesetzt werden, um die Brandlöschbomben (92) auszubilden, bevor die Brandlöschbomben (92) aus dem Luftfahrzeug (10) abgeworfen werden, wobei die Absorptionszeit 0 bis 60 s beträgt; oder
- die festen flüssigkeitsabsorbierenden Vorformen (90) über eine Absorptionszeit der Brandlöschflüssigkeit (100) ausgesetzt werden, um die Brandlöschbomben (92) auszubilden, bevor die Brandlöschbomben (92) aus dem Luftfahrzeug (10) abgeworfen werden, wobei die Absorptionszeit 1 bis 5 min beträgt; oder
- die festen flüssigkeitsabsorbierenden Vorformen (90) über eine Absorptionszeit der Brandlöschflüssigkeit (100) ausgesetzt werden, um die Brandlöschbomben (92) auszubilden, bevor die Brandlöschbomben (92) aus dem Luftfahrzeug (10) abgeworfen werden, wobei die Absorptionszeit 5 bis 10 min beträgt; oder
- die festen flüssigkeitsabsorbierenden Vorformen (90) über eine Absorptionszeit der Brandlöschflüssigkeit (100) ausgesetzt werden, um die Brandlöschbomben (92) auszubilden, bevor die Brandlöschbomben (92) aus dem Luftfahrzeug abgeworfen werden, wobei die Absorptionszeit 10 bis 30 min. beträgt.

12. Verfahren nach einem der Ansprüche 9 bis 11, **gekennzeichnet dadurch, dass** die festen flüssigkeitsabsorbierenden Vorformen (90) feste flüssigkeitsabsorbierende Vorformen (90) nach einem der Ansprüche 1 bis 8 sind.

## Revendications

1. Préforme solide de lutte contre l'incendie (90), la préforme solide de lutte contre l'incendie (90) comprenant :
- une couche absorbante de liquide (200), la couche absorbante de liquide (200) comprenant un matériau absorbant de liquide gonflable agencé pour absorber un liquide d'extinction d'incendie (100) ; et
- une couche de noyau (220) disposée à l'intérieur de la couche absorbante de liquide (200), la couche de noyau (220) comprenant un ou plusieurs éléments fonctionnels (224, 226) configurés pour interagir avec le sol,
**caractérisée en ce que** la préforme solide de lutte contre l'incendie (90) comprend une couche intermédiaire (210) disposée entre la couche absorbante de liquide (200) et la couche de noyau (220), la couche intermédiaire (210) comprenant un matériau retardateur de flamme.

2. Préforme solide de lutte contre l'incendie (90) selon la revendication 1, **caractérisée en ce que** la couche absorbante de liquide (220) comprend un matériau présentant un rapport pondéral d'absorption de liquide :
- d'au moins 10 g de liquide par 1 g du matériau des préformes solides absorbantes de liquide (90) ; ou
- d'au moins 50 g de liquide par 1 g du matériau des préformes solides absorbantes de liquide (90) ; ou
- d'au moins 100 g de liquide par 1 g du matériau des préformes solides absorbantes de liquide (90) ; ou
- d'au moins 200 g de liquide par 1 g du matériau des préformes solides absorbantes de liquide (90).

3. Préforme solide de lutte contre l'incendie (90) selon la revendication 1 ou 2, **caractérisée en ce que** la couche absorbante de liquide (200) comprend un matériau présentant un rapport de gonflement d'absorption de liquide :
- d'au moins 10 fois le volume des préformes solides absorbantes de liquide (90) ; ou
- d'au moins 25 fois le volume des préformes solides absorbantes de liquide (90) ; ou
- d'au moins 50 fois le volume des préformes solides absorbantes de liquide (90).

4. Préforme solide de lutte contre l'incendie (90) selon l'une quelconque des revendications 1 à 3, **caractérisée en ce que** la couche absorbante de liquide (200) est constituée de, ou comprend :
- un matériau superabsorbant ; ou
- un matériau polymère superabsorbant ; ou
- un matériau superabsorbant à base de cellulose ; ou
- un matériau à base d'hydrogel ou dérivé d'hydrogel.

5. Préforme solide de lutte contre l'incendie (90) selon l'une quelconque des revendications 1 à 4, **caractérisée en ce que** lesdits un ou plusieurs éléments fonctionnels (224, 226) de la couche de noyau (220) comprennent :
- une ou plusieurs graines de plantes (224) ; ou
- un matériau fertilisant (226) ; ou
- un matériau fertilisant (226) et une ou plusieurs graines de plantes (224).

6. Préforme solide de lutte contre l'incendie (90) selon l'une quelconque des revendications 1 à 5, **caractérisée en ce que** la couche de noyau (220) comprend :
- un matériau biodégradable, lesdits un ou plusieurs éléments fonctionnels (224, 226) étant disposés à l'intérieur du matériau biodégradable ; ou
- un matériau polymère biosourcé, lesdits un ou plusieurs éléments fonctionnels (224, 226) étant disposés à l'intérieur du matériau polymère biosourcé ; ou
- un matériau polymère biodégradable, lesdits un ou plusieurs éléments fonctionnels (224, 226) étant disposés à l'intérieur du matériau polymère biodégradable ; ou
- une combinaison d'au moins deux des éléments suivants : matériau biodégradable, matériau polymère biosourcé et matériau polymère biodégradable, lesdits un ou plusieurs éléments fonctionnels (224, 226) étant disposés à l'intérieur de la couche de noyau (220).

7. Préforme solide de lutte contre l'incendie (90) selon l'une quelconque des revendications 1 à 6, **caractérisée en ce que** la couche intermédiaire (210) comprend :
- un matériau retardateur de flamme biodégradable ; ou
- un matériau polymère retardateur de flamme biodégradable.

8. Préforme solide de lutte contre l'incendie (90) selon l'une quelconque des revendications 1 à 7, **caractérisé en ce que** la couche intermédiaire (210) comprend une première couche intermédiaire (216) et une deuxième couche intermédiaire (214), la première couche intermédiaire (216) est agencée entre la couche absorbante de liquide (200) et la deuxième couche intermédiaire (214), la deuxième couche intermédiaire (214) est agencée entre la première couche intermédiaire (216) et la couche de noyau (220), et **en ce que** :
- la première couche intermédiaire (216) comprend un matériau absorbant de liquide agencé pour absorber le liquide d'extinction d'incendie (100), et la deuxième couche intermédiaire (214) comprend un matériau retardateur de flamme ; ou
- la première couche intermédiaire (216) comprend un matériau retardateur de flamme, et la deuxième couche intermédiaire (214) comprend un matériau absorbant de liquide agencé pour absorber un liquide favorisant la croissance des plantes ; ou
- la première couche intermédiaire (216) comprend un matériau retardateur de flamme, et la deuxième couche intermédiaire (214) comprend un matériau absorbant de liquide imprégné de liquide favorisant la croissance des plantes.

9. Procédé de lutte aérienne contre l'incendie mettant en œuvre un véhicule aérien (10), **caractérisé en ce que** le procédé comprend :
- la mise à disposition d'un liquide d'extinction d'incendie (100) dans le véhicule aérien (10) ; et
- le maintien des préformes solides absorbantes de liquide (90) dans le véhicule aérien (10),
les préformes solides absorbantes de liquide (90) comprennent :
- une couche absorbante de liquide (200), la couche absorbante de liquide (200) comprenant un matériau absorbant de liquide gonflable agencé pour absorber un liquide d'extinction d'incendie (100) ; et
- une couche de noyau (220) disposée à l'intérieur de la couche absorbante de liquide (200), la couche de noyau (220) comprenant un ou plusieurs éléments fonctionnels (224, 226) configurés pour interagir avec le sol,
le procédé comprend en outre :
- la soumission d'au moins une partie des préformes solides absorbantes de liquide (90) au liquide d'extinction d'incendie (100) dans le véhicule aérien (10) de sorte que les couches absorbantes de liquide (200) des préformes solides absorbantes de liquide (90) absorbent le liquide d'extinction d'incendie (100) pour former des bombes d'extinction d'incendie (92) à partir des préformes solides absorbantes de liquide (90), la couche absorbante de liquide (200) des bombes d'extinction d'incendie (92) étant imprégnée du liquide d'extinction d'incendie (100) ; et
- la libération des bombes d'extinction d'incendie (92), dont la couche absorbante de liquide (200) entourant la couche de noyau (220) est imprégnée du liquide d'extinction d'incendie (100), depuis le véhicule aérien (10) afin d'éteindre ou de réduire l'incendie avec les bombes d'extinction d'incendie (92),
**caractérisé en ce que** la préforme solide de lutte contre l'incendie (90) comprend une couche intermédiaire (210) disposée entre la couche absorbante de liquide (200) et la couche de noyau (220), la couche intermédiaire (210) comprenant un matériau retardateur de flamme.

10. Procédé selon la revendication 9, **caractérisé en ce que** :
- les préformes solides absorbantes de liquide (90) sont mises à disposition sous forme de matériau granulé, dans lequel les préformes séparées solides absorbantes de liquide (90) présentent un diamètre de particule compris entre 1 et 10 mm ; ou
- les préformes solides absorbantes de liquide (90) sont mises à disposition sous forme d'ébauches de préformes prises séparément présentant un diamètre compris entre 10 et 100 mm.

11. Procédé selon la revendication 9 ou 10, **caractérisé en ce que** :
- les préformes solides absorbantes de liquide (90) sont soumises au liquide d'extinction d'incendie (100) pendant un temps d'absorption pour former les bombes d'extinction d'incendie (92) avant de libérer les bombes d'extinction d'incendie (92) depuis le véhicule aérien (10), le temps d'absorption étant compris entre 0 et 60 s ; ou
- les préformes solides absorbantes de liquide (90) sont soumises au liquide d'extinction d'incendie (100) pendant un temps d'absorption pour former les bombes d'extinction d'incendie (92) avant de libérer les bombes d'extinction d'incendie (92) depuis le véhicule aérien (10), le temps d'absorption étant compris entre 1 et 5 min ; ou
- les préformes solides absorbantes de liquide (90) sont soumises au liquide d'extinction d'incendie (100) pendant un temps d'absorption pour former les bombes d'extinction d'incendie (92) avant de libérer les bombes d'extinction d'incendie (92) depuis le véhicule aérien (10), le temps d'absorption étant compris entre 5 et 10 min ; ou
- les préformes solides absorbantes de liquide (90) sont soumises au liquide d'extinction d'incendie (100) pendant un temps d'absorption pour former les bombes d'extinction d'incendie (92) avant de libérer les bombes d'extinction d'incendie (92) depuis le véhicule aérien, le temps d'absorption étant compris entre 10 et 30 min.

12. Procédé selon l'une quelconque des revendications 9 à 11, **caractérisé en ce que** les préformes solides absorbantes de liquide (90) sont des préformes solides absorbantes de liquide (90) selon l'une quelconque des revendications 1 à 8.
